# EUROPÄISCHE PATENTSCHRIFT

(11) **EP 1 519 086 B1**
(45) Veröffentlichungstag und Bekanntmachung des Hinweises auf die Patenterteilung: **05.10.2011**
(21) Anmeldenummer: 04020595.7
(22) Anmeldetag: 31.08.2004
(51) Int. Cl.: F16H 63/38

(54) **Fahrzeug mit einem Getriebe und einem Bedienelement, das zum Entsperren einer Sperreinrichtung vorgesehen ist, um das Getriebe in einen Parkzustand zu schalten**
Vehicle with a gearbox and an operating element for unlocking a locking device in order to set the gearbox to parking state
Véhicule avec une boîte de vitesse et un elément de commande pour ouvrir un dispositif de fermeture afin de placer la boîte de vitesse à l'état de stationnement

(30) Priorität: 25.09.2003 DE 10344398
(43) Veröffentlichungstag der Anmeldung: 30.03.2005
(73) Patentinhaber: Bayerische Motoren Werke Aktiengesellschaft, 80788 München (DE)
(72) Erfinder: Neuner, Josef, 83064 Raubling (DE)

(56) Entgegenhaltungen:
- DE-A1- 10 045 953
- DE-A1- 10 052 260
- DE-A1- 19 820 920

## Beschreibung

Die vorliegende Erfindung betrifft ein Fahrzeug mit einem Getriebe und einem Bedienelement gemäß dem Oberbegriff des Patentanspruches 1, und wie es aus dem Dokument DE 198 20 920 A1 bekannt ist.

Aus der DE 199 40 029 A1 ist ein Automatikgetriebe bekannt, bei dem im Normalbetrieb durch eine Fahrstufenwähleinrichtung eine "Parksperre" einlegbar ist. Im Normalbetrieb wird das Automatikgetriebe also über die Fahrstufenwähleinrichtung in einen Parkzustand geschaltet. Bei dieser Schaltung handelt es sich um eine sogenannte "Shift-by-wire-Schaltung", d.h. die Signalübertragung von der Fahrstufenwähleinrichtung zum Automatikgetriebe erfolgt im Normalbetrieb rein elektrisch über eine Getriebeelektronik. Zusätzlich dazu ist jedoch ein Seilzugmechanismus vorgesehen, über den bei einem Ausfall der Getriebeelektronik die Parksperre manuell einlegbar und auslegbar ist. Der Seilzug ist vom Fahrgastraum aus erreichbar.

Aufgabe der Erfindung ist es, ein Fahrzeug mit einem Getriebe zu schaffen, bei dem sowohl im Normalbetrieb als auch in einem Notbetrieb die Parksperre in einfacher und sicherer Weise eingelegt werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Fahrzeug mit einem Getriebe aus, das sich in einem Zustand befinden kann, in dem es unter Hydraulikdruck steht oder in einem hydraulikdrucklosen Zustand. Wenn das Getriebe unter Hydraulikdruck steht, wird ein Einlegen der Parksperre durch den Hydraulikdruck verhindert, was im normalen Fahrbetrieb, im Rückfahrbetrieb und im Leerlauf der Fall ist. Wenn es sich im hydraulikdrucklosen Zustand befindet, kann es in einen Parkzustand geschaltet werden. Um zu verhindern, dass das Getriebe selbsttätig in den Parkzustand "fällt", sobald der Hydraulikdruck abfällt, ist eine "Sperreinrichtung" vorgesehen. Die Sperreinrichtung kann sich in einem "Sperrzustand" oder in einem "entsperrten Zustand" befinden. Im Sperrzustand verhindert die Sperreinrichtung, dass das Getriebe in den Parkzustand schaltet bzw. in den Parkzustand fällt. Im entsperrten Zustand gestattet die Sperreinrichtung ein Schalten in den Parkzustand. Ferner ist ein Bedienelement zum Entsperren der Sperreinrichtung vorgesehen.

Der Grundgedanke der Erfindung besteht nun darin, ein einziges Bedienelement vorzusehen, mit dem sowohl im Normalbetrieb als auch in einem Notbetrieb die Sperreinrichtung entsperrt werden kann. Im Normalbetrieb erfolgt die Entsperrung elektromechanisch über eine elektrische Steuerung, die der "Getriebesteuerung" zugerechnet werden kann. Das Bedienelement fungiert im Normalbetrieb als "Signalgeber" für die elektrische Steuerung bzw. eine damit zusammenwirkende elektromechanische Entsperreinrichtung bzw. einen elektromechanischen Aktor. Im Notbetrieb hingegen wird über das Bedienelement eine mechanische "Entsperrkraft" auf die Sperreinrichtung übertragen. Es wird dann also nicht elektrisch bzw. elektromechanisch, sondern rein mechanisch entsperrt, was beispielsweise dann erforderlich ist, wenn die elektrische Steuerung ausgefallen ist oder aus einem bestimmten Grund inaktiv ist. Selbst bei einem Ausfall der elektrischen Steuerung kann also der Parkzustand eingelegt und das Fahrzeug sicher abgestellt werden. Ein wesentlicher Vorteil für den Fahrer besteht darin, dass er im Normalbetrieb und im Notbetrieb die Parksperre über ein und dasselbe Bedienelement "einlegen" kann.

Nach einer Weiterbildung der Erfindung ist das Getriebe über eine Kopplungseinrichtung, zum Beispiel über einen Seilzug mit der Sperreinrichtung verbunden. Die Sperreinrichtung ist im Sperrzustand mit der Kopplungseinrichtung verrastbar bzw. verriegelbar oder in sonstiger Weise koppelbar, derart, dass ein selbsttätiges bzw. unbeabsichtigtes Schalten des Getriebes in den Parkzustand durch die Kopplungseinrichtung verhindert wird.

Nach einer Weiterbildung der Erfindung ist ein Federmechanismus vorgesehen, der, wenn sich das Getriebe in einem bestimmen "hydraulischen" Zustand, zum Beispiel im oben erwähnten hydraulikdrucklosen Zustand befindet und die Sperreinrichtung entsperrt ist, die Kopplungseinrichtung bzw. den Seilzug in eine Parkzustandsstellung zieht.

Das Bedienelement kann durch einen Arm eines Schwenkhebels gebildet sein. Im Sperrzustand ist der Schwenkhebel mit der Kopplungseinrichtung verrastet, wobei ein am Schwenkhebel vorgesehenes Sperrelement, zum Beispiel eine Sperrklinke, in eine damit zusammenwirkende Ausnehmung der Kopplungseinrichtung eingerastet ist. Die Sperreinrichtung ist in diesem Fall durch das Sperrelement bzw. durch die Sperrklinke und die an der Kopplungseinrichtung vorgesehene Ausnehmung gebildet.

Alternativ dazu kann das Bedienelement auch durch eine Drucktaste gebildet sein, die zum Beispiel auf einen Schwenkhebel wirkt. Im Sperrzustand ist der Schwenkhebel mit der Kopplungseinrichtung verrastet. Auch hier kann die Sperreinrichtung durch ein am Schwenkhebel vorgesehenes Sperrelement, zum Beispiel eine Sperrklinke, und eine damit zusammenwirkende Ausnehmung der Kopplungseinrichtung gebildet sein.

Vorzugsweise ist das Bedienelement im Fahrgastraum des Fahrzeugs angeordnet, zum Beispiel im Bereich der Mittelkonsole, am Lenkrad oder im Bereich des Lenkrades, an der Fahrertür oder in anderen für den Fahrer ergonomisch erreichbaren Bereichen.

Wie bereits erwähnt fungiert das Bedienelement zumindest in manchen Betriebszuständen als Signalgeber für einen elektromechanischen Aktor, der zum elektromechanischen Entsperren der Sperreinrichtung vorgesehen ist. Der Aktor ist vorzugsweise so mit dem Schwenkhebel verbunden, dass der Schwenkhebel durch den Aktor in Sperr- und/oder in Entsperrrichtung verschwenkbar ist. Der Aktor kann ein Elektromotor, zum Beispiel ein Linearmotor oder ein Drehmotor sein.

Der Aktor kann über ein Federelement und eine Zuggabel mit dem Schwenkhebel gekoppelt sein. Bei einer Betätigung des Schwenkhebels von Hand in einer Entsperrrichtung kann der Schwenkhebel verschwenkt werden, ohne dass der Aktor mitbewegt wird. Es wird also lediglich das Federelement zusammengedrückt bzw. auseinandergezogen. Die Zuggabel ist dazu vorgesehen, dass der Schwenkhebel vom Aktor in Entsperrrichtung gezogen werden kann. Selbstverständlich sind auch andere mechanische Kopplungen zwischen dem Aktor und dem Schwenkhebel denkbar.

Im folgenden wir die Erfindung im Zusammenhang mit der Zeichnung näher erläutert. Es zeigen:

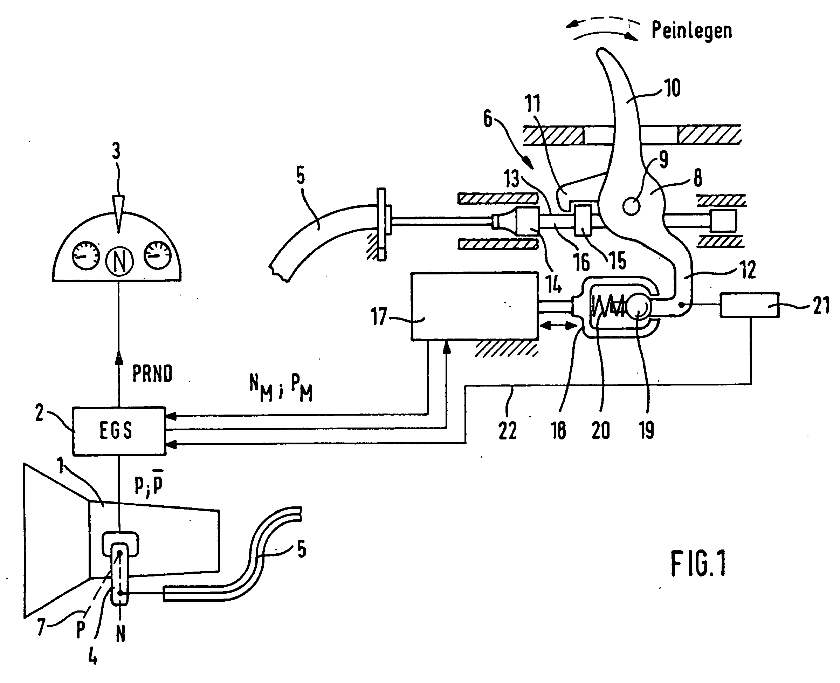

Figuren 1-3 verschiedene Ausführungsbeispiele gemäß der Erfindung.

Figur 1 zeigt ein Getriebe 1, das beispielsweise ein Automatikgetriebe oder ein automatisiertes Handschaltgetriebe sein kann. Das Getriebe wird durch eine elektronische Getriebesteuerung 2 gesteuert. Momentane Schalt- bzw. Betriebszustandssignale des Getriebes 1 werden über die elektronische Getriebesteuerung 2 einem Kombielement 3 zugeführt und dort dem Fahrer angezeigt.

Am Getriebe 1 ist ein Schwenkhebel 4 vorgesehen, der über einen Seilzug 5 mit einer Sperreinrichtung 6 verbunden ist. Über den Schwenkhebel 4, den Seilzug 5 und die Sperreinrichtung 6 kann verhindert bzw. gestattet werden, dass das Getriebe 1 in einen Parkzustand schaltet. In der hier gezeigten Stellung des Schwenkhebels befindet sich das Getriebe 1 nicht im Parkzustand, sondern in einem anderen Betriebszustand, beispielsweise im Leerlaufbetrieb, im Fahrbetriebszustand oder im Rückfahrbetrieb. In diesen Betriebszuständen herrscht im Getriebe 1 ein Hydraulikdruck, der ein Verschwenken des Schwenkhebels 4 aus der in Figur 1 gezeigten Stellung verhindert.

Wird über einen Wählhebel (nicht dargestellt) der Parkzustand angewählt oder wird der Motor des Fahrzeugs ausgeschaltet, so schaltet die elektronische Getriebesteuerung 2 das Getriebe 1 in einen Betriebszustand, in dem der Hydraulikdruck im Parksperrventil abgefallen ist. In solchen oder anderen Situationen, in denen der Hydraulikdruck im Getriebe 1 abgefallen ist, ist grundsätzlich ein Schalten in den Parkzustand möglich. Im Parkzustand ist der Schwenkhebel 4 in die gestrichelt angedeuteten Parkstellung P geschwenkt, die mit dem Bezugszeichen 7 bezeichnet ist. Um zu verhindern, dass das Getriebe bei einem Abfall des Hydraulikdrucks "selbsttätig" in den Parkzustand "fällt", ist die Sperreinrichtung 6 vorgesehen. Abgesehen von Fällen, in denen der Fahrer den Motor und/oder die Zündung ausschaltet und vorgesehen sein kann, dass das Getriebe 1 "automatisch" in den Parkzustand schaltet, wird grundsätzlich durch die Sperreinrichtung 6 sichergestellt, dass das Getriebe nur dann in den Parkzustand schaltet, wenn der Fahrer die Sperreinrichtung 6 aktiv betätigt. Nur wenn die Sperreinrichtung 6 entsperrt ist kann der Schwenkhebel 4 in seine Parkstellung 7 schwenken.

Im folgenden wird die Sperreinrichtung 6 näher erläutert. Bei dem hier gezeigten Ausführungsbeispiel ist ein Schwenkhebel 8 vorgesehen, der um eine Schwenkachse 9 schwenkbar angeordnet ist. Der Schwenkhebel 8 weist einen als "Bedienelement" fungierenden Hebelarm 10, eine Sperrklinke 11 und einen weiteren Hebelarm 12 auf. In der in Fig. 1 gezeigten Stellung greift die Sperrklinke 11 in eine Ausnehmung 13 des Seilzugs 5 ein. Die Ausnehmung 13 ist durch zwei voneinander beabstandete Ringelemente 14, 15, die durch einen Mittelabschnitt 16 miteinander verbunden sind, gebildet. In der hier gezeigten Stellung, in der im Getriebe 1 ein Hydraulikdruck herrscht, wird der Seilzug 5 von dem mit Hydraulikdruck beaufschlagten Schwenkhebel 4 ganz nach "rechts" gedrückt, so dass zwischen der Sperrklinke 11 und dem Ringelement 15 ein kleiner Spalt besteht. Die Sperrklinke 11 liegt also nicht oder nur leicht an dem Ringelement 15 an.

Wie bereits erwähnt, weist der Schwenkhebel 8 einen weiteren Hebelarm 12 auf. Der weitere Hebelarm 12 ist mechanisch mit einem Elektromotor 17 gekoppelt und zwar über eine Zuggabel 18, in die ein kugelförmiges Element 19 des Hebelarms 12 eingreift. Das kugelförmige Element 19 ist in der Zuggabel 18 entgegen der Kraft einer Druckfeder 20 verschiebbar. Der Elektromotor 17 wird durch die elektronische Getriebesteuerung 2 angesteuert. Ferner ist ein hier nur schematisch dargestellter Positionssensor 21 vorgesehen, der über eine elektrische Leitung 22 ebenfalls mit der elektrischen Getriebesteuerung 2 verbunden ist.

Im folgenden wird die Funktionsweise näher erläutert. Wenn sich das Getriebe 1 im Leerlaufbetrieb, im Fahrzustand oder im Rückfahrzustand befindet und der Motor ausgeschaltet wird, fällt der Hydraulikdruck im Getriebe ab, was dazu führt, dass der Schwenkhebel 4 versucht in die gestrichelt dargestellte P-Stellung 7 zu schwenken. Dies ist jedoch nur dann möglich, wenn der Schwenkhebel 8 in Entsperrrichtung verschwenkt wird und die Sperrklinke 11 ausser Eingriff kommt. Das Abschalten des Motors wird von der elektronischen Getriebesteuerung 2 sensiert. Die elektronische Getriebesteuerung 2 steuert daraufhin den Elektromotor 17 an, der die Zuggabel 18 nach "links" zieht und den Schwenkhebel 8 im Uhrzeigersinn verschwenkt. Durch Verschwenken des Schwenkhebels 8 im Uhrzeigersinn gibt die Sperrklinke 11 den Seilzug 5 frei und das Getriebe 1 kann in den Parkzustand schalten. Auslösesignal für das Umschalten in den Parkzustand kann also beispielsweise ein "Motor-Aus-Signal" in Kombination mit einem weiteren Signal, wie zum Beispiel einem Geschwindigkeitssignal, sein, oder ein "Zündung-Aus-Signal" allein oder in Kombination mit weiteren Signalen.

Wenn sich das Getriebe 1 im Leerlaufzustand, im Fahrzustand oder im Rückfahrzustand befindet, kann der Fahrer auch "manuell" in den Parkzustand schalten. "Manuell" bedeutet in diesem Zusammenhang, dass das Getriebe 1 aktiv vom Fahrer und nicht wie oben beschrieben betriebszustandsabhängig automatisch in den Parkzustand geschaltet wird. Dies kann beispielsweise durch Betätigen eines herkömmlichen Getriebewählhebels, einer Park-Taste oder eines Park-Hebels (nicht dargestellt) erfolgen.

Alternativ oder ergänzend dazu ist ein "manuelles" Umschalten des Getriebes 1 in den Parkzustand durch Betätigen des Schwenkhebels 8 am Hebelarm 10 möglich. Wie bereits erwähnt herrscht im Getriebe 1 ein Hydraulikdruck, wenn sich das Getriebe im Leerlaufbetrieb, im Fahrzustand oder im Rückfahrzustand befindet. Der Hydraulikdruck bewirkt, dass der Schwenkhebel 4 entgegen den Uhrzeigersinn mit einer Kraft beaufschlagt wird, wodurch der Seilzug 5 "nach rechts" verschoben wird, so dass die Sperrklinke 11 nicht oder nur ganz leicht an dem Ringelement 15 anliegt.

Der Fahrer kann somit mit einer relativ geringen Kraft, die primär durch die Druckkraft der Feder 20 bestimmt ist, den Schwenkhebel 8 im Uhrzeigersinn verschwenken. Die Zuggabel 18 wird dabei zunächst nicht verschoben. Die Schwenkbewegung des Schwenkhebels 8 wird durch den Positionssensor 21 sensiert. Der Positionssensor 21 liefert ein entsprechendes Schwenksignal an die elektronische Getriebesteuerung 2. Die elektronische Getriebesteuerung 2 wiederum steuert den Elektromotor 17 an. Anstatt eines Elektromotors kann auch ein Elektromagnet vorgesehen sein. Dieser zieht den Schwenkhebel 8 über die Zuggabel 18 nach links, so dass die Sperrklinke 11 den Seilzug 5 freigibt. Gleichzeitig mit dem vom Positionssensor 21 an die elektronische Getriebesteuerung 2 gelieferten Signal schaltet die elektronische Getriebesteuerung 2 den Hydraulikdruck im Getriebe 1 ab, so dass das Getriebe 1 in den Parkzustand umschalten kann.

Wenn anschließend wieder über ein Wählelement (nicht dargestellt) in den Leerlaufbetrieb, in den Fahrzustand oder in den Rückfahrzustand umgeschaltet werden soll, steuert die elektronische Getriebesteuerung den Elektromotor 17 entsprechend an, wobei die Zuggabel nach rechts verschoben und der Schwenkhebel 8 in seine Ausgangsstellung zurückgeschwenkt wird.

Wie bereits angedeutet, betreffen die oben beschriebenen Funktionen den "Normalbetrieb", in dem insbesondere die elektronische Getriebesteuerung und der Motor 17 ordnungsgemäß arbeiten. Wenn der Motor und/oder die Zündung des Fahrzeugs ausgeschaltet ist, oder wenn eine Störung der elektronischen Getriebesteuerung vorliegt, fällt dem Getriebe 1 der Hydraulikdruck ab, was dazu führt, dass der Schwenkhebel 4 versucht, in die Parkstellung 7 zu schwenken. Dies wird jedoch grundsätzlich verhindert, da im Sperrzustand das ringartige Element 15 an der Sperrklinke 11 anliegt. Bei einem Ausfall der Elektronik bzw. bei abgeschaltetem Motor oder abgeschalteter Zündung kann der Schwenkhebel 8 jedoch nach wie vor von Hand im Uhrzeigersinn verschwenkt werden. Durch Verschwenken des Schwenkhebels 8 im Uhrzeigersinn kann der Seilzug 5 rein mechanisch entriegelt werden, so dass auch in solchen Fällen das Getriebe 1, wenn vom Fahrer gewünscht, in den Parkzustand schalten kann.

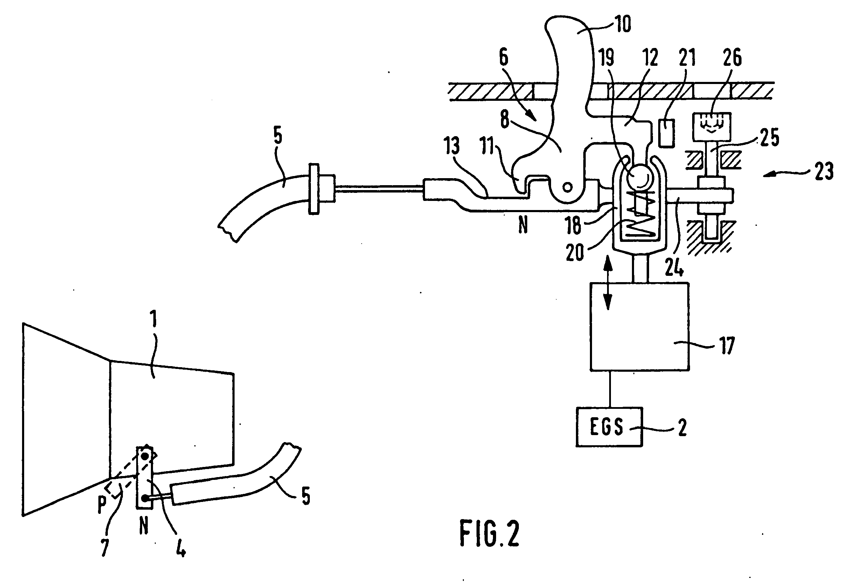

**Figur 2** zeigt ein Ausführungsbeispiel, das hinsichtlich seiner Funktion dem Ausführungsbeispiel der **Figur 1** sehr ähnlich ist, das jedoch eine zusätzliche Betätigungseinrichtung 23 aufweist, die als "Notentriegelung" für das Getriebe 1 oder als "Notverriegelung" für die Sperreinrichtung 6 bezeichnet werden kann.

Wie bereits im Zusammenhang mit **Figur 1** erläutert, kann bei einem Ausfall der elektronischen Getriebesteuerung bzw. des Motors 17 die Sperreinrichtung 6 auch durch eine rein manuelle Betätigung des Schwenkhebels 8, das heißt rein manuell entriegelt werden. Der Schwenkhebel 4 verschwenkt dabei in die Parkstellung 7, was dazu führt, dass der Seilzug 5 nach "links" gezogen wird und das Getriebe 1 in den Parkzustand schaltet.

In diesem Zustand kann das Fahrzeug sicher, das heißt gegen Wegrollen gesichert abgestellt werden. Wenn das Fahrzeug anschließend abgeschleppt werden soll, muss jedoch der Parkzustand wieder "deaktiviert" werden, das heißt der Seilzug 5 muss nach "rechts" gezogen werden. Während im Normalbetrieb beim Aufbau eines Hydraulikdrucks im Getriebe 1 der Seilzug automatisch durch den Hydraulikdruck nach rechts verschoben wird, muss bei einer Störung der Schwenkhebel "manuell" nach rechts gezogen werden, um den Parkzustand zu deaktivieren. Hierzu ist der Seilzug über einen Seilzugabschnitt, zum Beispiel über ein elastisches Band 24 mit einer Aufwickelvorrichtung 25 verbunden, die im Notfall zum Beispiel über einen Inbus 26, ein Handrad oder ähnliches aufwickelbar ist. Wenn der Seilzug 5 wieder nach rechts gezogen wurde, rastet die Sperrklinke 11 in die Ausnehmung 13 ein und hält das Getriebe 1 in einem entsperrten Zustand z.B. im Leerlaufzustand.

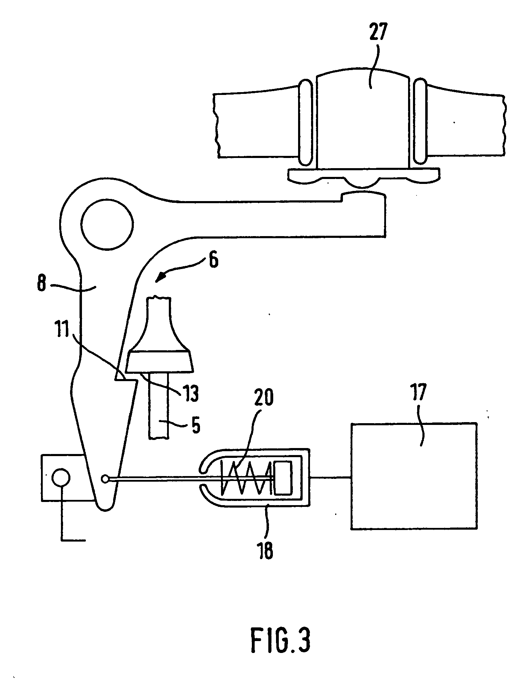

**Figur 3** zeigt ein Ausführungsbeispiel, bei dem der Schwenkhebel 8 nicht, wie bei den Ausführungsbeispielen der **Figuren 1** und **2**, unmittelbar durch einen mit dem Schwenkhebel 8 verbundenen Hebelarm bedienbar ist, sondern durch eine Drucktaste 27. Selbstverständlich sind die im Zusammenhang mit den Figuren 1 und 2 erläuterten Funktionen auch durch eine derartige Variante mit einer Drucktaste 27 darstellbar.

## Patentansprüche

1. Fahrzeug mit
einem Getriebe (1), einer mit dem Getriebe (1) zusammenwirkenden Sperreinrichtung (6), die sich in einem Sperrzustand, in dem sie ein Schalten des Getriebes in einen Parkzustand verhindert, oder in einem entsperrten Zustand befindet, in dem sie ein Schalten des Getriebes (1) in den Parkzustand gestattet,
einem Bedienelement (10, 27), das zum Entsperren der Sperreinrichtung (6) vorgesehen ist, **dadurch gekennzeichnet, dass** das Bedienelement (10, 27) als Signalgeber für einen elektromechanischen Aktor (17) fungiert, der zum elektromechanischen Entsperren der Sperreinrichtung (6) vorgesehen ist und das Bedienelement (10, 27) zusätzlich als rein mechanisches Betätigungselement zum rein mechanischen Entsperren der Sperreinrichtung (6) fungiert, insbesondere wenn der elektromechanische Aktor (17) inaktiv ist.

2. Fahrzeug nach Anspruch 1, wobei das Getriebe (1) über eine mechanische Kopplungseinrichtung (5) mit der Sperreinrichtung (6) verbunden ist.

3. Fahrzeug nach Anspruch 2, wobei die Kopplungseinrichtung (5) ein Seilzug ist.

4. Fahrzeug nach einem der Ansprüche 2 oder 3, wobei die Sperreinrichtung (6) im Sperrzustand mit der Kopplungseinrichtung (5) verrastbar ist und ein Schalten des Getriebes (1) in den Parkzustand verhindert.

5. Fahrzeug nach einem der Ansprüche 2 bis 4, wobei ein Federmechanismus vorgesehen ist, der, wenn sich das Getriebe (1) in einem hydraulikdrucklosen Zustand befindet und die Sperreinrichtung (6) entsperrt ist, die Kopplungseinrichtung (5) in eine Parkzustandsstellung bewegt.

6. Fahrzeug nach einem der Ansprüche 1 bis 5, wobei das Bedienelement (10, 27) durch einen Hebelarm eines Schwenkhebels (8) gebildet ist, der im Sperrzustand mit der Kopplungseinrichtung (5) verrastet ist, wobei die Sperreinrichtung (6) durch ein am Schwenkhebel (8) vorgesehenes Sperrelement (11) und eine damit zusammenwirkende Ausnehmung (13) der Kopplungseinrichtung (5) gebildet ist.

7. Fahrzeug nach einem der Ansprüche 1 bis 5, wobei das Bedienelement (10, 27) durch eine Drucktaste gebildet ist, die auf einen Schwenkhebel (8) wirkt, der im Sperrzustand mit der Kopplungseinrichtung (5) verrastet ist, wobei die Sperreinrichtung (6) durch ein am Schwenkhebel (8) vorgesehenes Sperrelement (11) und eine damit zusammenwirkende Ausnehmung (13) der Kopplungseinrichtung (5) gebildet ist.

8. Fahrzeug nach einem der Ansprüche 1 bis 7, wobei das Bedienelement (10, 27) in einem Fahrgastraum des Fahrzeugs angeordnet ist.

9. Fahrzeug nach einem der Ansprüche 1 bis 8, wobei der Aktor (17) so mit dem Schwenkhebel (8) gekoppelt ist, dass der Schwenkhebel (8) durch den Aktor (17) zumindest in einer Entsperrrichtung verschwenkbar ist.

10. Fahrzeug nach einem der Ansprüche 1 bis 9, wobei der Aktor ein Elektromotor (17) oder ein Elektromagnet ist.

11. Fahrzeug nach einem der Ansprüche 1 bis 10, wobei der Aktor (17) über ein Federelement (20) mit dem Schwenkhebel (8) gekoppelt ist, derart, dass der Schwenkhebel von Hand in einer Entsperrrichtung verschwenkbar ist, ohne dass der Aktor mitbewegt wird.

12. Fahrzeug nach einem Ansprüche 1 bis 11, wobei eine Steuerelektronik (2) für das Getriebe (1) vorgesehen ist, an die das als Signalgeber fungierende Bedienelement (10, 27) und der Aktor (17) angeschlossen sind.

13. Fahrzeug nach einem der Ansprüche 1 bis 12, wobei das Bedienelement (10, 27) als Schalter für den elektromechanischen Aktor fungiert.

14. Fahrzeug nach einem der Ansprüche 1 bis 13, wobei ein Positionssensor (21) vorgesehen ist, der die Stellung der Sperreinrichtung (6) sensiert und der bei einem Entsperren der Sperreinrichtung (6) durch Betätigen des Bedienelements (10, 27) ein elektrisches Signal zur Ansteuerung des Aktors (17) an die Steuerelektronik (2) liefert.

15. Fahrzeug nach einem der Ansprüche 12 bis 14, wobei die Steuerelektronik (2) die Sperreinrichtung (6) durch Ansteuern des Aktors (17) in den entsperrten Zustand schaltet, wenn ein Fahrzeugmotor ausgeschaltet wird.

16. Fahrzeug nach einem der Ansprüche 12 bis 15, wobei die Steuerelektronik (2) die Sperreinrichtung (6) durch Ansteuern des Aktors (17) in den entsperrten Zustand schaltet, wenn eine Zündung des Fahrzeugmotors ausgeschaltet wird.

## Claims

1. A vehicle with a transmission (1), a locking device (6), which cooperates with the transmission (1) and which is in a locking state, in which it prevents the transmission being shifted into a parking state, or in an unlocked state, in which it allows a shifting of the transmission (1) into the parking state, an operating element (10, 27), which is provided to unlock the locking device (6), **characterised in that** the operating element (10, 27) acts as a signal transmitter for an electromechanical actuator (17), which is provided for the electromechanical unlocking of the locking device (6) and the operating element (10 27) additionally acts as a purely mechanical actuating element for the purely mechanical unlocking of the locking device (6), especially when the electromechanical actuator (17) is inactive.

2. A vehicle according to claim 1, wherein the transmission (1) is connected by a mechanical coupling device (5) to the locking device (6).

3. A vehicle according to claim 2, wherein the coupling device (5) is a cable pull.

4. A vehicle according to either of claims 2 or 3, wherein the locking device (6) can be latched to the coupling device (5) in the locking state and prevents the transmission (1) being shifted into the parking state.

5. A vehicle according to any one of claims 2 to 4, wherein a spring mechanism is provided which, when the transmission (1) is in a hydraulic pressureless state and the locking device (6) is unlocked, moves the coupling device (5) into a parking state position.

6. A vehicle according to any one of claims 1 to 5, wherein the operating element (10, 27) is formed by a lever arm of a pivot lever (8), which, in the locking state, is latched to the coupling device (5), wherein the locking device (6) is formed by a locking element (11) provided on the pivot lever (8) and a recess (13), which cooperates therewith, of the coupling device (5).

7. A vehicle according to any one of claims 1 to 5, wherein the operating element (10, 27) is formed by a push button, which acts on a pivot lever (8), which, in the locking state, is latched to the coupling device (5), wherein the locking device (6) is formed by a locking element (11) provided on the pivot lever (8) and a recess (13), which cooperates therewith, of the coupling device (5).

8. A vehicle according to any one of claims 1 to 7, wherein the operating element (10, 27) is arranged in a passenger compartment of the vehicle.

9. A vehicle according to any one of claims 1 to 8, wherein the actuator (17) is coupled to the pivot lever (8) in
such a way that the pivot lever (8) can be pivoted by the actuator (17) at least in an unlocking direction.

10. A vehicle according to any one of claims 1 to 9, wherein the actuator is an electric motor (17) or an electromagnet.

11. A vehicle according to any one of claims 1 to 10, wherein the actuator (17) is coupled by a spring element (20) to the pivot lever (8) in such a way that the pivot lever can be pivoted by hand in an unlocking direction, without the actuator also being moved.

12. A vehicle according to any one of claims 1 to 11, wherein an electronic control system (2) is provided for the transmission (1), to which the operating element (10, 27) acting as a signal transmitter and the actuator (17) are connected.

13. A vehicle according to any one of claims 1 to 12, wherein the operating element (10, 27) acts as a switch for the electromechanical actuator.

14. A vehicle according to any one of claims 1 to 13, wherein a position sensor (21) is provided, which senses the position of the locking device (6) and which when the locking device (6) is unlocked by actuating the operating element (10, 27), supplies an electric signal to the electronic control system (10) to activate the actuator (17).

15. A vehicle according to any one of claims 12 to 14, wherein the electronic control system (2) shifts the locking device (6) into the unlocked state by activating the actuator (17) if a vehicle engine is switched off.

16. A vehicle according to any one of claims :12 to 15, wherein the electronic control system (2) shifts the locking device (6) into the unlocked state by activating the actuator (17), if an ignition of the vehicle engine is switched off.

## Revendications

1. Véhicule équipé d'une boîte de vitesses (1) ainsi que d'une installation de verrouillage (6) coopérant avec la boîte de vitesses (1), et qui à l'état verrouillé, interdit le passage de la boîte de vitesses en mode de stationnement ou qui, à l'état déverrouillé, permet le passage de la boîte de vitesses (1) en mode de stationnement,
- un élément de manoeuvre (10, 27) déverrouillant l'installation de verrouillage (6),
véhicule **caractérisé en ce que**
l'élément de manoeuvre (10, 27) fonctionne comme générateur de signal pour un actionneur électromécanique (17) qui déverrouille l'installation de verrouillage (6) de manière électromécanique, et l'élément de manoeuvre (10, 27) fonctionne en outre comme élément de manoeuvre purement mécanique pour déverrouiller l'installation de verrouillage (6) de manière purement mécanique, notamment si l'actionneur électromécanique (17) n'est pas actif.

2. Véhicule selon la revendication 1,
selon lequel
la boîte de vitesses (1) est reliée à l'installation de verrouillage (6) par une installation de couplage (5), mécanique.

3. Véhicule selon la revendication 2,
selon lequel
l'installation de couplage (5) est un câble de traction.

4. Véhicule selon l'une des revendications 2 ou 3,
selon lequel
l'installation de verrouillage (6) est accrochée à l'installation de couplage (5) à l'état verrouillé et interdit à la boîte de vitesses (1) de commuter en mode de stationnement.

5. Véhicule selon l'une des revendications 2 à 4, comportant un mécanisme à ressort qui, si la boîte de vitesses (1) est à l'état hors pression hydraulique et si l'installation de verrouillage (6) est déverrouillée, déplace l'installation de couplage (5) pour la mettre en mode de stationnement.

6. Véhicule selon l'une des revendications 1 à 5,
selon lequel
- l'élément de manoeuvre (10, 27) est constitué par le bras de levier d'un levier pivotant (8) accroché à l'installation de couplage (5) à l'état verrouillé, et
- l'installation de verrouillage (6) est formée par un élément de verrouillage (11) du levier pivotant (8) et une cavité (13) de l'installation de couplage (5) coopère avec cet élément.

7. Véhicule selon l'une des revendications 1 à 5,
selon lequel
- l'élément de manoeuvre (10, 27) est constitué par un bouton poussoir agissant sur un levier pivotant (8) accroché à l'installation de couplage (5) en position verrouillée, et
- l'installation de verrouillage (6) est formée par un élément de verrouillage (11) prévu sur le levier pivotant (8) et une cavité (13) de l'installation de couplage (5) coopère avec cet élément.

8. Véhicule selon l'une des revendications 1 à 7,
selon lequel
l'élément de manoeuvre (10, 27) se trouve dans l'habitacle du véhicule.

9. Véhicule selon l'une des revendications 1 à 8,
selon lequel
l'actionneur (17) est couplé au levier pivotant (8) pour que le levier pivotant (8) puisse être pivoté au moins dans le sens du déverrouillage par l'actionneur (17).

10. Véhicule selon l'une des revendications 1 à 9,
selon lequel
l'actionneur est un moteur électrique (17) ou un électroaimant.

11. Véhicule selon l'une des revendications 1 à 10,
selon lequel
l'actionneur (17) est couplé au levier pivotant (8) par un élément à ressort (20) de façon que le levier pivotant puisse être pivoté manuellement dans le sens du déverrouillage sans participation de l'actionneur.

12. Véhicule selon l'une des revendications 1 à 11,
selon lequel
la boîte de vitesses (1) comporte une électronique de commande (2) à laquelle est relié l'élément de manoeuvre (10, 27) fonctionnant comme générateur de signal et l'actionneur (17).

13. Véhicule selon l'une des revendications 1 à 12,
selon lequel
l'élément de manoeuvre (10, 27) fonctionne comme commutateur de l'actionneur électromécanique.

14. Véhicule selon l'une des revendications 1 à 13, comportant un capteur de position (21) qui détecte la position de l'installation de verrouillage (6) et qui, lors du déverrouillage de l'installation de verrouillage (6) par l'actionnement de l'élément de manoeuvre (10, 27), génère un signal électrique fourni à l'électronique de commande (2) pour commander l'actionneur (17).

15. Véhicule selon l'une des revendications 12 à 14,
selon lequel
l'électronique de commande (2) commute l'installation de verrouillage (6) en commandant l'actionneur (17) vers l'état déverrouillé lorsque le moteur du véhicule est arrêté.

16. Véhicule selon l'une des revendications 12 à 15,
selon lequel
l'électronique de commande (2) commute l'installation de verrouillage (6) en commandant l'actionneur (17) à l'état déverrouillé lors de la coupure de l'allumage du moteur du véhicule.
